# EUROPÄISCHE PATENTANMELDUNG

(11) **EP 4 741 241 A1**
(43) Veröffentlichungstag der Anmeldung: **13.05.2026**
(21) Anmeldenummer: 25210921.0
(22) Anmeldetag: 23.10.2025
(51) Int. Cl.: B60W 10/06, B60W 10/08, B60W 20/16

(54) **COMPUTERIMPLEMENTIERTES VERFAHREN ZUR BESTIMMUNG VON ANSTEUERUNGSDATEN FÜR EINEN HYBRIDANTRIEB**

(30) Priorität: 06.11.2024 DE 102024210668
(71) Anmelder: Volkswagen Aktiengesellschaft, 38440 Wolfsburg (DE)
(72) Erfinder: Kraus, Stephan, 38440 Wolfsburg (DE); Bunkus, Johannes, 38440 Wolfsburg (DE)

(57) **Zusammenfassung**

Computerimplementiertes Verfahren zur Bestimmung von Ansteuerungsdaten für einen Hybridantrieb mit einer Verbrennungskraftmaschine und einem Elektromotor für ein Fahrzeug, die Schritte umfassend: Empfangen von Solldrehmomentdaten für den Hybridantrieb (S10); Bestimmen von Verbrennungskraftmaschinenansteuerungsdaten für die Verbrennungskraftmaschine auf Basis der empfangenen Solldrehmomentdaten (S20); Bestimmen von Elektromotoransteuerungsdaten für den Elektromotor (S30); wobei die Verbrennungskraftansteuerungsdaten derart bestimmt werden, dass ein Drehmomentgradient der Verbrennungskraftmaschine begrenzt wird; und wobei die Elektromotorenansteuerungsdaten auf Basis der Solldrehmomentdaten für den Hybridantrieb und Verbrennungskraftmaschinenmotormoment, die aus den bestimmten Verbrennungskraftmaschinenansteuerungsdaten resultieren, bestimmt werden; Bereitstellen der bestimmten Elektromotoransteuerungsdaten und der bestimmten Verbrennungskraftmaschinenansteuerungsdaten (S40);
wobei zur Bereitstellung der Verbrennungskraftmaschinenansteuerungsdaten auf Basis des begrenzten Drehmomentgradienten eine korrespondierende AGR Rate bestimmt wird.

## Beschreibung

Die vorliegende Erfindung betrifft ein computerimplementiertes Verfahren zur Bestimmung von Ansteuerungsdaten für einen Hybridantrieb, eine Steuerung zur Ausführung eines solchen Verfahrens, einen Hybridantrieb mit einer solchen Steuerung und ein Kraftfahrzeug mit einer solchen Steuerung und/oder einem solchen Hybridantrieb.

Hybridantriebe für Kraftfahrzeuge sind aus dem Stand der Technik grundsätzlich bekannt. Antriebe umfassen dabei eine Verbrennungskraftmaschine und einen Elektromotor. Hierbei kann der Elektromotor zur Unterstützung der Verbrennungskraftmaschine eingesetzt werden. Dabei kann beispielsweise ein sogenannter Boostbetrieb zur Steigerung der maximalen Antriebsleistung der Verbrennungskraftmaschine realisiert werden oder ein Phlegmatisierbetrieb, der eine gezielte Leistungsreduktion der Verbrennungskraftmaschine und einen Ausgleich der gezielten Leistungsreduktion der Verbrennungskraftmaschine durch den Elektromotor umfasst, um beispielsweise Schadstoffemissionen zu reduzieren. Hierbei können sich jedoch einzelne Emissionswerte der Schadstoffemissionen auch verschlechtern.

Aus der DE 10 2015 226 216 A1 ist ein Verfahren zum Betreiben eines Kraftfahrzeugs mit einem Hybridantrieb bekannt, dass beim Auftreten einer erhöhten Lastanforderung für die Verbrennungskraftmaschine in einer Phase mit fettem Luft/Kraftstoffgemisch ein Drehmoment der Verbrennungskraftmaschine konstant hält und das zusätzliche benötigte Drehmoment über eine Elektromaschine aufgebracht wird.

Aus der DE 10 2019 115 209 A1 ist ein Verfahren zum Betreiben eines Hybridantriebs bekannt, bei dem ein maximal realisierbarer Drehmomentgradient eines Verbrennungsmotors derart reduziert wird, dass eine Ist-Abgasrückführungsrate während eines Übergangs von einem ersten Lastniveau zu einem zweiten Lastniveau nahe einer Sollabgasrückführungsrate bleibt.

Aus der DE 10 2017 100 878 A1 ist ein Verfahren zum Betreiben eines Hybridkraftfahrzeugs bekannt, bei dem in einem Hochlastbereich durch Einstellen eines Boostbetriebes oder, falls ein Boostbetrieb nicht möglich ist und eine alternative Getriebestufe nicht gewählt werden kann, durch Begrenzen des Motormomentes des Dieselmotors der Hochlastbereich verlassen wird.

Aus der DE 10 2020 203 007 A1 ist ein Verfahren zum Betreiben eines hybriden Antriebssystems bekannt, bei dem ein Elektromotorensystem mit einem Kompensationsstrom angesteuert wird, der elektrische Verlustströme des Elektromotorensystems ausgleicht.

In diesem Zusammenhang hat sich nun herausgestellt, dass ein Bedarf besteht, ein Verfahren zur Bestimmung von Ansteuerungsdaten für einen Hybridantrieb bereitzustellen. Insbesondere besteht ein Bedarf, ein verbessertes Verfahren zur Bestimmung von Ansteuerungsdaten für einen Hybridantrieb bereitzustellen.

Es ist daher Aufgabe der vorliegenden Erfindung, die oben beschriebenen Nachteile bei der Ansteuerung von Hybridantrieben für Kraftfahrzeuge zu beheben oder zumindest teilweise zu beheben. Insbesondere ist es Aufgabe der vorliegenden Erfindung, ein verbessertes Verfahren zur Bestimmung von Ansteuerungsdaten für einen Hybridantrieb bereitzustellen. Die voranstehende Aufgabe wird durch die Patentansprüche gelöst. Insbesondere wird die Aufgabe durch ein computerimplementiertes Verfahren zur Ansteuerung eines Hybridantriebs mit den Merkmalen des unabhängigen Anspruchs 1 gelöst. Ferner wird die Aufgabe durch eine Steuerung mit den Merkmalen des Anspruchs 9, einen Hybridantrieb mit den Merkmalen des Anspruchs 10 und ein Kraftfahrzeug mit den Merkmalen des Anspruchs 11 gelöst.

Dabei gelten Merkmale, die im Zusammenhang mit dem erfindungsgemäßen Verfahren beschrieben sind, selbstverständlich auch im Zusammenhang mit der erfindungsgemäßen Steuerung, dem erfindungsgemäßen Hybridantrieb und dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der vorliegenden Erfindung wird ein computerimplementiertes Verfahren zur Bestimmung von Ansteuerungsdaten für einen Hybridantrieb mit einer Verbrennungskraftmaschine und einem Elektromotor für ein Fahrzeug bereitgestellt, die Schritte umfassend: Empfangen von Solldrehmomentdaten für den Hybridantrieb, Bestimmen von Verbrennungskraftmaschinenansteuerungsdaten für die Verbrennungskraftmaschine auf Basis der empfangenen Solldrehmomentdaten, Bestimmen von Elektromotoransteuerungsdaten für den Elektromotor, wobei die Verbrennungskraftansteuerungsdaten derart bestimmt werden, dass ein Drehmomentgradient der Verbrennungskraftmaschine begrenzt wird, und wobei die Elektromotorenansteuerungsdaten auf Basis der Solldrehmomentdaten für den Hybridantrieb und Verbrennungskraftmaschinenmotormomenten, die aus den bestimmten Verbrennungskraftmaschinenansteuerungsdaten resultieren, bestimmt werden, Bereitstellen der bestimmten Elektromotoransteuerungsdaten und der bestimmten Verbrennungskraftmaschinenansteuerungsdaten, wobei zur Bereitstellung der Verbrennungskraftmaschinenansteuerungsdaten auf Basis des begrenzten Drehmomentgradienten eine korrespondierende AGR Rate bestimmt wird.

Der Begriff Ansteuerungsdaten meint vorliegend Daten, die eingerichtet sind, die Verbrennungskraftmaschine und den Elektromotor anzusteuern. Die Ansteuerungsdaten umfassen dabei Verbrennungskraftmaschinenansteuerungsdaten und Elektromotoransteuerungsdaten. Die Verbrennungskraftmaschinenansteuerungsdaten können dabei Daten umfassen, die zumindest ein Stellelement ansteuern, das das Drehmoment bzw. den Drehmomentgradienten der Verbrennungskraftmaschine beeinflusst. Das zumindest eine Stellelement kann eines der folgenden umfassen: Einspritzdüse, Kraftstoffdruckregler. Die Verbrennungskraftmaschinenansteuerungsdaten können dabei Daten umfassen, die zumindest ein Stellelement ansteuern, das die AGR Rate beeinflusst. Das zumindest eine Stellelement für die Beeinflussung der AGR Rate kann ein AGR Ventil sein.

Die Verbrennungskraftansteuerungsdaten können dabei Daten umfassen, die zumindest ein Stellelement ansteuern, das eine Füllung der Verbrennungskraftmaschine beeinflusst. Das zumindest eine Stellelement zur Beeinflussung der Füllung kann eine Drosselklappe umfassen.

Die Elektromotoransteuerungsdaten können dabei Daten umfassen, die zumindest ein Stellelement ansteuern, das das Drehmoment und insbesondere die Drehzahl des Elektromotors beeinflusst. Das Stellelement kann dabei zumindest einen Umrichter umfassen. Der Umrichter kann eine Spannung für eine Drehzahl und eine Stromstärke für ein Drehmoment beeinflussen.

Der Begriff Füllung meint vorliegend die Menge an zugeführter Frischluft und zurückgeführter Abgasluft.

Der Begriff AGR Rate meint vorliegend das als Verhältnis aus zurückgeführter Abgasluft und gesamter zugeführter Luft bestehend aus zugeführter Frischluft und zurückgeführter Abgasluft.

Der Begriff Hybridantrieb meint vorliegend einen Antrieb, der zumindest eine Verbrennungskraftmaschine und zumindest einen Elektromotor umfasst. Der Hybridantrieb kann eines der folgenden umfassen: Mild-Hybrid, Voll-Hybrid, Plug-in-Hybrid. Die Verbrennungskraftmaschine kann eines der folgenden umfassen: Ottomotor, Dieselmotor.

Der Begriff Solldrehmomentdaten meint vorliegend ein Drehmoment und einen zugehörigen Drehmomentgradienten, welche der Hybridantrieb bereitstellen soll. Das Solldrehmoment und ein zugehöriger Solldrehmomentgradient können beispielsweise aus einem Wunschdrehmoment eines Fahrers des Kraftfahrzeugs und einem aktuell vorliegenden Drehmoment des Hybridantriebs abgeleitet werden. Das Wunschdrehmoment kann beispielsweise aus einer Gaspedalstellung abgeleitet werden. In diesem Zusammenhang kann weiterhin zwischen einem Solldrehmoment und einem Solldrehmomentgradienten der Verbrennungskraftmaschine und einem Solldrehmoment und einem Solldrehmomentgradienten des Elektromotors differenziert werden. Die jeweiligen Solldrehmomente und Solldrehmomentgradienten können sich dann aus einer Aufteilung der Antriebsleistung auf die Verbrennungskraftmaschine und den Elektromotor ergeben.

In diesem Zusammenhang kann weiterhin zwischen einem Maximaldrehmoment und einem Maximaldrehmomentgradienten der Verbrennungskraftmaschine und einem Maximaldrehmoment und einem Maximaldrehmomentgradienten des Elektromotors differenziert werden. Die Maximaldrehmomente und Maximaldrehmomentgradienten der Verbrennungskraftmaschine und des Elektromotors ergeben zusammen das Maximaldrehmoment und den Maximaldrehmomentgradienten des Hybridantriebs.

In diesem Zusammenhang kann weiterhin zwischen einem Boostbetrieb und einem Phlegmatisierbetrieb unterschieden werden. Beim Boostbetrieb liegt das Wunschdrehmoment höher als das Maximaldrehmoment der Verbrennungskraftmaschine. Wenn dann beispielsweise das Wunschdrehmoment dem Maximaldrehmoment Hybridantriebs entspricht, werden Verbrennungskraftmaschine und Elektromotor mit ihren Maximaldrehmomenten und ggfs. auch mit ihren maximalen Drehmomentgradienten betrieben, um dieses Wunschdrehmoment möglichst schnell zu erzielen.

Beim Phlegmatisierbetrieb, der vorzugsweise bei einer kalten Abgastemperatur angewandt wird, wird ein Solldrehmomentgradient der Verbrennungskraftmaschine bewusst reduziert, d.h., unterhalb des Maximaldrehmomentgradienten der Verbrennungskraftmaschine eingestellt und gleichzeitig die Reduktion des Solldrehmomentgradienten der Verbrennungskraftmaschine durch eine derartige Einstellung eines Solldrehmomentgradienten des Elektromotors ausgeglichen. Dadurch können Emissionen vermieden werden.

Die Bestimmung einer korrespondierenden AGR-Rate in Abhängigkeit des reduzierten Drehmomentgradienten meint vorliegend, dass die AGR-Rate, also die Soll-AGR-Rate, nicht anhand des ursprünglichen ohne Begrenzung vorhandenen Drehmomentgradienten der Verbrennungskraftmaschine gebildet wird, sondern auf Basis des reduzierten Drehmomentgradienten der Verbrennungskraftmaschine, oder auch der stationären Bedatung der Soll-AGR-Rate. Die korrespondierende AGR-Rate meint eine Soll-AGR-Rate. Infolgedessen kommt es nach dem Lastsprung zu einer geringeren Reduzierung der AGR-Rate. Dadurch kann der Sauerststoffgehalt im Abgas trotz Mengenbegrenzung reduziert werden, wodurch insbesondere die NOx-Emissionen reduziert werden.

Der Erfindung liegt die Erkenntnis zugrunde, dass im Phlegmatisierbetrieb die NOX-Emissionen überdurchschnittlich hoch sind. Dies liegt unter anderem daran, dass die AGR-Rate nicht an den reduzierten Drehmomentgradienten angepasst wird. Hier geht die Steuerung immer noch von dem nicht reduzierten Drehmomentgradienten aus. Da sich bei reduziertem Drehmomentgradient weniger Kraftstoff im Brennraum befindet, müsste die AGR-Rate entsprechend angepasst werden. Ohne Anpassung der AGR-Rate erhöht sich der Sauerstoffgehalt im Abgas aufgrund der Mengenbegrenzung (i.e. Menge an eingespritztem Kraftstoff). Nach dem Lastsprung (i.e. nach Anforderung Wunschdrehmoment) reduziert sich jedoch aktuell die AGR-Rate. Ursachen hierfür sind u. a., dass der Sollwert für die AGR-Rate auf Basis des ursprünglichen Drehmomentgradienten gebildet wird. Weiterhin kommt es aufgrund von Füllungsabweichungen zu einer dynamischen AGR-Korrektur. Die Füllungsabweichung entsteht aufgrund einer Reduzierung der Abgas-Enthalpie durch Einspritzmengenrücknahme. Die Sollwertbildung für die Füllung erfolgt auf Basis der ursprünglichen nicht reduzierten Drehmomentgradienten. Die Erfindung schlägt nun neben der Begrenzung des Drehmomentgradienten die Anpassung der AGR-Rate an den reduzierten Drehmomentgradienten vor. Hierzu wird im Vergleich zu einem nicht reduzierten Drehmomentgradient die AGR-Rate nach einem Lastsprung langsamer reduziert. Es wird somit mehr Abgas rückgeführt. Als Folge dessen wird im Abgas der Sauerstoffgehalt begrenzt und es kommt zu einer geringeren NOX-Emission.

Gemäß einer bevorzugten Ausführungsform kann auf Basis des begrenzten Drehmomentgradienten eine korrespondierende Füllung bestimmt werden.

Die korrespondierende Füllung meint eine Soll-Füllung. Die Anpassung einer Sollwertbildung für die Füllung an die reduzierten Drehmomentgradienten anstelle einer Sollwertbildung für die Füllung an ursprünglich nicht reduzierten Drehmomentgradienten führt zu einer geringeren Füllungsabweichung. Dies wirkt sich wiederum auf die AGR-Rate aus, da keine dynamische Korrektur der AGR-Rate aufgrund einer Füllungsabweichung auftritt. So kann auf synergetische Weise ein Verlauf der AGR-Rate nochmals angehoben werden. Auf diese Weise kann durch die Anpassungen der AGR-Rate die NOX-Emission weiter reduziert werden. Weiterhin zeigt sich, trotz angehobener AGR-Rate bei Reduzierung der NOx-Emissionen, kann hierdurch vorteilhafterweise das Abgaslambda leicht erhöht werden, sodass weniger Ruß im Abgas auftritt.

Gemäß einer bevorzugten Ausführungsform kann der Drehmomentgradient auf 80% eines Maximaldrehmomentgradienten der Verbrennungskraftmaschine begrenzt werden, insbesondere auf 70%, insbesondere auf einen Bereich von 60% bis 70%.

Auf diese Weise kann vorteilhafterweise die Emission im Allgemeinen begrenzt werden und insbesondere die NOX-Emission.

Gemäß einer bevorzugten Ausführungsform kann der Drehmomentgradient auf unter 80Nm/s begrenzt werden.

Auf diese Weise kann vorteilhafterweise die Emission im Allgemeinen begrenzt werden und insbesondere die NOX-Emission.

Gemäß einer bevorzugten Ausführungsform kann der Drehmomentgradient auf unter 50Nm/s begrenzt werden, insbesondere in einem Bereich von über 30Nm/s und unter 50Nm/s.

Auf diese Weise kann vorteilhafterweise die Emission im Allgemeinen begrenzt werden und insbesondere die NOX-Emission.

Gemäß einer bevorzugten Ausführungsform kann der Drehmomentgradient der Verbrennungskraftmaschine begrenzt werden, wenn eine Temperatur eines Abgases der Verbrennungskraftmaschine unterhalb eines Grenzwertes liegt, insbesondere unterhalb 220°C, insbesondere unterhalb 210°C, insbesondere unterhalb 200°C.

Bei kalter Abgastemperatur, insbesondere unter einem Grenzwert von 200°C, arbeitet der Katalysator unzureichend, sodass hohe NOX-Werte emittiert werden. Das Verfahren greift hier durch die Begrenzung des Drehmomentgradienten ein und ermöglicht die Begrenzung der Emissionen, insbesondere der NOX-Emissionen.

Gemäß einer bevorzugten Ausführungsform kann, wenn die Temperatur des Abgases der Verbrennungskraftmaschine oberhalb des Grenzwertes liegt, der Drehmomentgradient nicht begrenzt werden, und auf Basis der Solldrehmomentdaten die Verbrennungskraftmaschinenansteuerungsdaten und Elektromotorenansteuerungsdaten bestimmt werden.

Oberhalb des Grenzwertes kann der Katalysator ausreichend arbeiten, sodass ein Phlegmatisierbetrieb nicht notwendig ist. In diesem Fall wird der Hybridantrieb in einem Boostbetrieb eingesetzt. Der Elektromotor dient hierbei der Leistungsanhebung, sofern die Verbrennungskraftmaschine bei Volllast arbeitet. Das Verfahren unterscheidet vorteilhafterweise zwischen Phlegmatisierbetrieb und Boostbetrieb, sodass der Hybridantrieb optimal emissionsarm und in Bezug auf sportliche Fahrweise eingesetzt werden kann.

Gemäß einer bevorzugten Ausführungsform kann ein Übergang zwischen einem begrenztem und nicht begrenztem Drehmomentgradient für einen Zwischenbereich von 10K, insbesondere 5K definiert sein. Der Übergangsbereich ist durch lineare Interpolation, oder annähernd lineare Interpolation definiert. Der Übergangsbereich liegt beispielsweise im Bereich von 195°C bis 205°C.

Ein weiterer Aspekt der vorliegenden Offenbarung betrifft eine Steuerung zur Ausführung eines oben näher beschriebenen Verfahrens. Die Steuerung kann beispielsweise die Motorsteuerung des Fahrzeugs sein.

Die Steuerung kann dabei mit Hardware, Software und/oder einer Kombination davon implementiert werden. Hardware-Vorrichtungen können beispielsweise durch Verarbeitungsschaltungen wie einen Prozessor, eine Zentraleinheit (CPU), einen Controller, eine arithmetische Logikeinheit (ALU), einen digitalen Signalprozessor, einen Mikrocomputer, ein feldprogrammierbares Gate-Array (FPGA), ein System-on-Chip (SoC), eine programmierbare Logikeinheit, einen Mikroprozessor oder jede andere Vorrichtung, die in der Lage ist, auf Befehle zu reagieren und diese in einer festgelegten Weise auszuführen, implementiert werden.

Die Steuerung kann Schnittstellenschaltungen umfassen. Die Schnittstellschaltungen können verdrahtete oder drahtlose Schnittstellen umfassen, die mit einem lokalen Netz (LAN), dem Internet, einem Weitverkehrsnetz (WAN) oder Kombinationen davon verbunden sind.

Die Steuerung kann ein oder mehrere Speichergeräte enthalten. Bei der einen oder den mehreren Speichervorrichtungen kann es sich um materielle oder nichttransitorische computerlesbare Speichermedien handeln, wie Direktzugriffsspeicher (RAM), Festwertspeicher (ROM), ein permanentes Massenspeichergerät (z. B. ein Festplattenlaufwerk), ein Solid-State-Gerät (z. B. NAND-Fash) und/oder jeder andere Datenspeichermechanismus, der Daten speichern und aufzeichnen kann. Die eine oder die mehreren Speichervorrichtungen können so konfiguriert sein, dass sie Computerprogramme, Programmcode, Anweisungen oder eine Kombination davon speichern.

Ein weiterer Aspekt der vorliegenden Offenbarung betrifft einen Hybridantrieb mit einer oben näher beschriebenen Steuerung.

Ein weiterer Aspekt der vorliegenden Offenbarung betrifft ein Kraftfahrzeug mit einer oben näher beschriebenen Steuerung und/oder einen oben näher beschriebenen Hybridantrieb.

Alle hierin beschriebenen Offenbarungen und Ausführungsformen beziehen sich auf das oben beschriebene Verfahren, die Steuerung, den Hybridantrieb sowie das Kraftfahrzeug und umgekehrt. Vorteilhafterweise gelten die Vorteile, die eine der Ausführungsformen und Beispiele bietet, auch für alle anderen Ausführungsformen und Beispiele und umgekehrt. D. h., die Vorteile, die ausführlich zu dem computerimplementierten Verfahren zur Bestimmung von Ansteuerungsdaten für einen Hybridantrieb beschrieben werden, gelten gleichermaßen bei der Steuerung zur Ausführung eines oben näher beschriebenen Verfahrens, bei dem Hybridantrieb sowie bei dem Kraftfahrzeug.

Es zeigen jeweils schematisch:
- Figur 1: eine Darstellung eines erfindungsgemäßen Verfahrens;
- Figur 2: eine Darstellung eines Momentenverlaufs bei einem Phlegmatisierbetrieb oder einem Boostbetrieb;
- Figur 3: eine Darstellung der Verläufe des Moments bei Anwendung des erfindungsgemäßen Verfahrens;
- Figur 4: eine Darstellung der Verläufe der AGR Rate bei Anwendung des erfindungsgemäßen Verfahrens.
- Figur 5: eine Darstellung der Verläufe der Füllung bei Anwendung des erfindungsgemäßen Verfahrens.
- Figur 6: eine Darstellung der Verläufe der NOX Emission bei Anwendung des erfindungsgemäßen Verfahrens, und
- Figur 7: eine Darstellung der Verläufe des Abgas Lambdas bei Anwendung des erfindungsgemäßen Verfahrens.

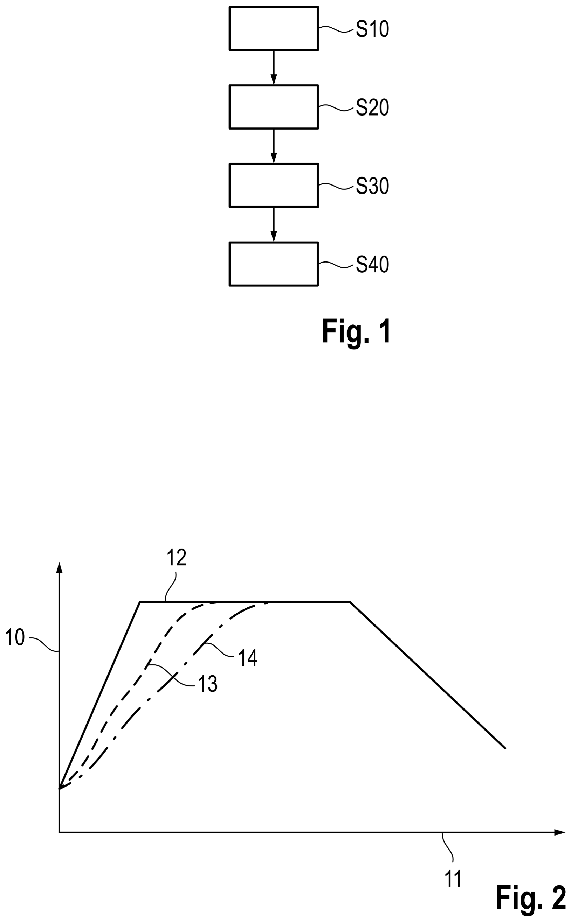

Fig. 1 zeigt eine schematische Darstellung eines erfindungsgemäßen computerimplementierten Verfahrens zur Bestimmung von Steuerungsdaten für einen Hybridantrieb mit einer Verbrennungskraftmaschine und einem Elektromotor für ein Kraftfahrzeug. Die Verbrennungskraftmaschine ist vorliegend ein Dieselmotor. Der Hybridantrieb ist ein Mild Hybrid Antrieb.

Schritt S10 umfasst ein Empfangen von Solldrehmomentdaten für den Hybridantrieb. Die Solldrehmomentdaten werden vorliegend aus einem Wunschdrehmoment abgeleitet, das aus einer Gaspedalstellung des Kraftfahrzeugs abgeleitet wird.

Schritt S20 umfasst ein Bestimmen von Verbrennungskraftmaschinenansteuerungsdaten für die Verbrennungskraftmaschine auf Basis der empfangenen Solldrehmomentdaten. Hierbei werden die Verbrennungskraftansteuerungsdaten derart bestimmt werden, dass ein Drehmomentgradient der Verbrennungskraftmaschine begrenzt wird. Der Drehmomentgradient der Verbrennungskraftmaschine wird beispielsweise auf 70% des maximal möglichen Drehmomentgradienten der Verbrennungskraftmaschine begrenzt. Weiterhin wird vorliegend die AGR-Rate an den begrenzten Drehmomentgradienten angepasst.

Schritt S30 umfasst ein Bestimmen von Elektromotoransteuerungsdaten für den Elektromotor. Die Elektromotorenansteuerungsdaten werden auf Basis der Solldrehmomentdaten für den Hybridantrieb und den Verbrennungskraftmaschinenmotormomenten, die aus den bestimmten Verbrennungskraftmaschinenansteuerungsdaten resultieren, bestimmt. Vorliegend werden die Elektromotoransteuerungsdaten derart bestimmt, dass der reduzierte Drehmomentgradient der Verbrennungskraftmaschine, hier von 70% statt 100%, ausglichen wird. Dadurch spürt der Fahrer keinen Leistungsverlust beim Fahren und gleichzeitig wird die NOX-Emission reduziert.

Schritt S40 umfasst das Bereitstellen der bestimmten Elektromotoransteuerungsdaten und der bestimmten Verbrennungskraftmaschinenansteuerungsdaten (S40). Die bereitgestellten Elektromotoransteuerungsdaten und Verbrennungskraftmaschinenansteuerungsdaten werden zur Ansteuerung der Verbrennungskraftmaschine und des Elektromotors durch die Motorsteuerung verwendet.

Auf diese Weise kann vorteilhafterweise die NOX-Emission reduziert werden.

Weiterhin können vorzugsweise die Verbrennungskraftmaschinenansteuerungsdaten derart bestimmt werden, dass die Füllung an den reduzierten Drehmomentgradienten angepasst wird.

Auf diese Weise kann vorteilhafterweise die NOX-Emission weiter reduziert werden.

Fig. 2 zeigt eine schematische Darstellung eines Momentenverlaufs eines Hybridantriebs bei Boostbetrieb und Phlegmatisierbetrieb.

Auf der Hochachse 10 ist das Moment aufgetragen und auf Längsachse 11 die Motordrehzahl. Der durchgezogene Verlauf 12 entspricht einer stationären Drehmomentgrenze für den Verbrennungsmotor. Die Solldrehmomentvorgabe wird beispielsweise aus einem Wunschdrehmoment abgeleitet. Der gestrichelte Verlauf 13 entspricht einem maximal möglichen Drehmomentgradienten der Verbrennungskraftmaschine im dynamischen Motorbetrieb. Um den Stationärdrehmomentverlauf zu erzielen, muss vorliegend der sogenannte Boostbetrieb durchgeführt werden, d.h., die Verbrennungskraftmaschine wird mit Maximaldrehmomentgradienten betrieben und zusätzlich durch den Elektromotor unterstützt. Der gepunktete Verlauf 14 entspricht einem reduzierten Drehmomentgradienten der Verbrennungskraftmaschine, der im sogenannten Phlegmatisierbetrieb vorliegt. Hierbei wird der Drehmomentgradient der Verbrennungskraftmaschine bewusst reduziert und die Reduktion durch den Elektromotor ausgeglichen, sodass der Hybridantrieb vorliegend die gestrichelte Kurve 13 abbildet. Dadurch können vorteilhafterweise die Emissionen der Verbrennungskraftmaschine reduziert werden.

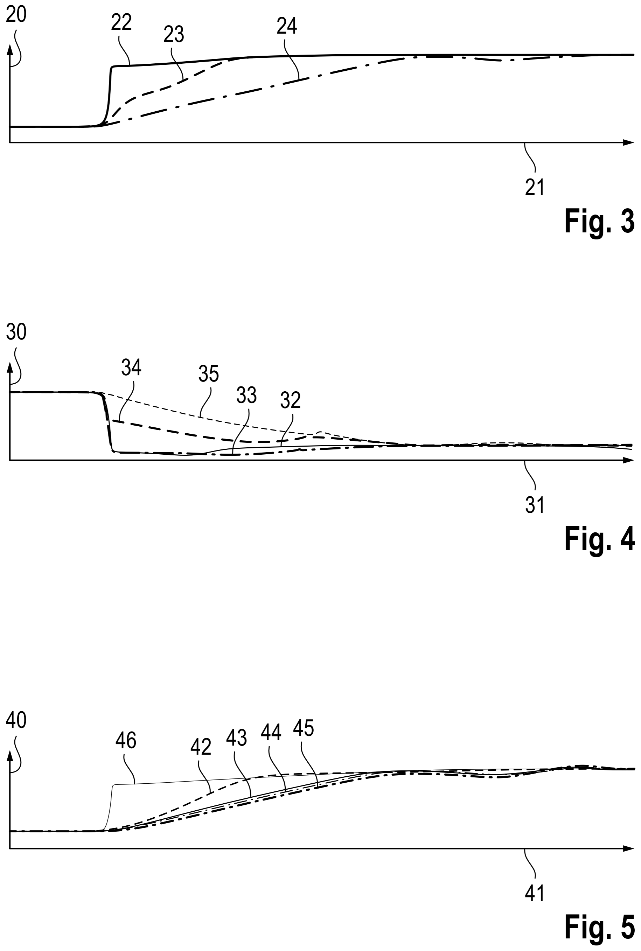

Fig. 3 bis 7 zeigen jeweils korrespondierende Verläufe des Moments der Verbrennungskraftmaschine, der NOX Rate, der AGR-Rate, der Füllung und Abgas Lambdas bei Anwendung des erfindungsgemäßen Verfahrens.

Fig. 3 zeigt Verläufe des Moments der Verbrennungskraftmaschine bei Anwendung des erfindungsgemäßen Verfahrens. Auf der Hochachse 20 ist das Moment aufgetragen, auf der Längsachse 21 die Zeit. Der Verlauf 22 zeigt eine ungefilterte Sollvorgabe für den Drehmomentwunsch, beispielsweise aus einem Fahrerwunsch, an die Verbrennungskraftmaschine. Der Verlauf 23 zeigt den aktuell möglichen, maximalen Verlauf des Drehmomentwunsches, welcher aufgrund des vorherrschenden Verbrennungsluftverhältnis umgesetzt werden kann, ohne zusätzliche Drehmomentbegrenzung. Der Verlauf 24 zeigt beispielhaft den Verlauf mit Drehmomentbegrenzung.

Fig. 4 zeigt die Verläufe der AGR-Rate bei Anwendung des erfindungsgemäßen Verfahrens. Auf der Hochachse 30 ist die AGR-Rate aufgetragen, auf der Längsachse 31 die Zeit. Der Verlauf 32 zeigt die AGR-Rate, welche aufgrund des vorherrschenden Verbrennungsluftverhältnis umgesetzt werden kann, ohne zusätzliche Drehmomentbegrenzung. Der Verlauf 33 zeigt die AGR-Rate mit Drehmomentbegrenzung. Der Verlauf 34 zeigt die AGR-Rate mit Drehmomentbegrenzung und auf die Drehmomentbegrenzung angepasste AGR-Rate. Der Verlauf 35 zeigt die AGR-Rate mit Drehmomentbegrenzung und auf die Drehmomentbegrenzung angepasste AGR-Rate und auf die Drehmomentbegrenzung angepasste Füllung. Die Verläufe 32 und 33 verhalten sich annähernd gleich. Der Verlauf 34 verläuft auf einem höheren Niveau als der Verlauf 33. Weiterhin verläuft der Verlauf 35 auf einem noch höheren Niveau als der Verlauf 34.

Fig. 5 zeigt die Verläufe der Füllung bei Anwendung des erfindungsgemäßen Verfahrens. Auf der Hochachse 40 ist die Füllung aufgetragen, auf der Längsachse 41 die Zeit. Der Verlauf 46 zeigt einen Sollwertverlauf für die Füllung, resultierend aus dem Drehmomentwunsch, beispielsweise aus dem Fahrerwunschmoment, an die Verbrennungskraftmaschine. Der Verlauf 42 zeigt den Istwertverlauf, welche vom Aufladesystem maximal umgesetzt werden kann, ohne Drehmomentbegrenzung. Deutlich sichtbar ist hierbei die auftretende Differenz zwischen dem Sollwertverlauf der Füllung 46 und dem Istwertverlauf 42. Die entstehende Differenz zwischen Sollwertverlauf und Istwertverlauf bestimmt maßgeblich de Begrenzung der zurückgeführten Abgasmenge.

Der Verlauf 43 zeigt den Istwertverlauf der Füllung mit Drehmomentbegrenzung. Der Verlauf 44 zeigt den Istwertverlauf der Füllung mit Drehmomentbegrenzung und auf die Drehmomentbegrenzung angepasste AGR-Rate. Beide Verläufe zeigen eine zunehmende Differenz zwischen dem Sollwertverlauf 46 und dem Istwertverlauf. Die zunehmende Differenz erfolgt aus verringertem Enthalpieangebot an die Abgasturbine des Abgasturboladers, bei aktiver Drehmomentbegrenzung. Aufgrund der zunehmenden Füllungsdifferenz wird auch die zurückgeführte Abgasmenge stärker begrenzt.

Der Verlauf 45 zeigt den Istwertverlauf der Füllung mit Drehmomentbegrenzung und auf die Drehmomentbegrenzung angepasste AGR-Rate und auf die Drehmomentbegrenzung angepasstem Füllungs-Sollwertverlauf.

Hierbei ist ersichtlich, dass Sollwertverlauf und Istwertverlauf keine Differenz aufzeigen. Somit wird die zurückgeführte Abgasmenge nicht zusätzlich begrenzt.

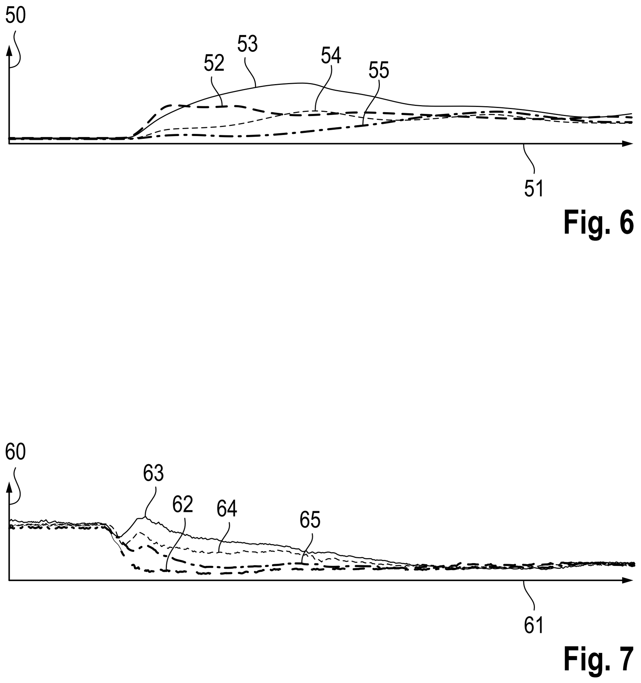

Fig. 6 zeigt die Verläufe der NOX-Emission bei Anwendung des erfindungsgemäßen Verfahrens. Auf der Hochachse 50 ist die NOX-Emission aufgetragen, auf der Längsachse 51 die Zeit. Der Verlauf 52 zeigt die NOX-Emission ohne Drehmomentbegrenzung. Der Verlauf 53 zeigt die NOX-Emission mit Drehmomentbegrenzung. Der Verlauf 54 zeigt die NOX-Emission mit Drehmomentbegrenzung und auf die Drehmomentbegrenzung angepasste AGR-Rate. Der Verlauf 55 zeigt die NOX-Emission mit Drehmomentbegrenzung und auf die Drehmomentbegrenzung angepasste AGR-Rate und auf die Drehmomentbegrenzung angepasste Füllung. Es ist zu sehen, dass die Verläufe der NOX-Emissionen 54 und 55 gegenüber den Verläufen 52 und 53 abnehmen.

Fig. 7 zeigt die Verläufe des Abgas Lambdas bei Anwendung des erfindungsgemäßen Verfahrens. Auf der Hochachse 60 ist das Abgas Lambda aufgetragen, auf der Längsachse 61 die Zeit. Der Verlauf 62 zeigt das Abgas Lambda ohne Drehmomentbegrenzung. Der Verlauf 63 zeigt das Abgas Lambda mit Drehmomentbegrenzung. Der Verlauf 64 zeigt das Abgas Lambda mit Drehmomentbegrenzung und auf die Drehmomentbegrenzung angepasste AGR Rate. Der Verlauf 65 zeigt die Abgas Lambda mit Drehmomentbegrenzung und auf die Drehmomentbegrenzung angepasste AGR Rate und auf die Drehmomentbegrenzung angepasste Füllung. Es ist zu sehen, dass die Verläufe 64 und 65 sich dem Verlauf 62 wieder annähern. Ferner ist zu sehen, dass der Verlauf 63 am stärksten vom Verlauf 62 abweicht.

### Bezugszeichenliste

- 10: Hochachse
- 11: Längsachse
- 12: Solldrehmomentvorgabe
- 13: maximal möglicher Drehmomentgradient
- 14: reduzierter bzw. begrenzter Drehmomentgradient
- 20: Hochachse
- 21: Längsachse
- 22: Solldrehmomentvorgabe
- 23: maximal möglicher Drehmomentverlauf ohne Drehmomentbegrenzung
- 24: Drehmomentverlauf mit Drehmomentbegrenzung
- 30: Hochachse
- 31: Längsachse
- 32: Verlauf AGR Rate ohne Drehmomentbegrenzung
- 33: Verlauf AGR Rate mit Drehmomentbegrenzung
- 34: Verlauf AGR mit Drehmomentbegrenzung und angepasster AGR Rate
- 35: Verlauf AGR mit Drehmomentbegrenzung und angepasster AGR Rate sowie angepasster Füllung
- 40: Hochachse
- 41: Längsachse
- 42: Verlauf Füllung ohne Drehmomentbegrenzung
- 43: Verlauf Füllung mit Drehmomentbegrenzung
- 44: Verlauf Füllung mit Drehmomentbegrenzung und angepasster AGR Rate
- 45: Verlauf Füllung mit Drehmomentbegrenzung und angepasster AGR Rate sowie angepasster Füllung
- 46: Verlauf Sollfüllung
- 50: Hochachse
- 51: Längsachse
- 52: Verlauf NOX Emission ohne Drehmomentbegrenzung
- 53: Verlauf NOX Emission mit Drehmomentbegrenzung
- 54: Verlauf NOX Emission mit Drehmomentbegrenzung und angepasster AGR Rate
- 55: Verlauf NOX Emission mit Drehmomentbegrenzung und angepasster AGR Rate sowie angepasster Füllung

- 60: Hochachse
- 61: Längsachse
- 62: Verlauf Abgas Lambda ohne Drehmomentbegrenzung
- 63: Verlauf Abgas Lambda mit Drehmomentbegrenzung
- 64: Verlauf Abgas Lambda mit Drehmomentbegrenzung und angepasster AGR Rate
- 65: Verlauf Abgas Lambda mit Drehmomentbegrenzung und angepasster AGR Rate sowie angepasster Füllung

- S10: Empfangen Solldrehmomentdaten
- S20: Bestimmen von Verbrennungskraftmaschinenansteuerungsdaten
- S30: Bestimmen von Elektromotoransteuerungsdaten
- S40: Bereitstellen der bestimmten Elektromotoransteuerungsdaten und der bestimmten Verbrennungskraftmaschinenansteuerungsdaten

## Patentansprüche

1. Computerimplementiertes Verfahren zur Bestimmung von Ansteuerungsdaten für einen Hybridantrieb mit einer Verbrennungskraftmaschine und einem Elektromotor für ein Fahrzeug, die Schritte umfassend:
Empfangen von Solldrehmomentdaten für den Hybridantrieb (S10);
Bestimmen von Verbrennungskraftmaschinenansteuerungsdaten für die Verbrennungskraftmaschine auf Basis der empfangenen Solldrehmomentdaten (S20);
Bestimmen von Elektromotoransteuerungsdaten für den Elektromotor (S30);
wobei die Verbrennungskraftansteuerungsdaten derart bestimmt werden, dass ein Drehmomentgradient der Verbrennungskraftmaschine begrenzt wird; und
wobei die Elektromotorenansteuerungsdaten auf Basis der Solldrehmomentdaten für den Hybridantrieb und Verbrennungskraftmaschinenmotormomenten, die aus den bestimmten Verbrennungskraftmaschinenansteuerungsdaten resultieren, bestimmt werden;
Bereitstellen der bestimmten Elektromotoransteuerungsdaten und der bestimmten Verbrennungskraftmaschinenansteuerungsdaten (S40);
wobei zur Bereitstellung der Verbrennungskraftmaschinenansteuerungsdaten auf Basis des begrenzten Drehmomentgradienten eine korrespondierende AGR Rate bestimmt wird.

2. Verfahren nach Anspruch 1,
wobei auf Basis des begrenzten Drehmomentgradienten eine korrespondierende Füllung bestimmt wird.

3. Verfahren nach Anspruch 1 oder 2,
wobei der Drehmomentgradient auf 80% eines Maximaldrehmomentgradienten der Verbrennungskraftmaschine begrenzt wird, insbesondere auf 70%, insbesondere auf einen Bereich von 60% bis 70%.

4. Verfahren nach einem der vorherigen Ansprüche,
wobei der Drehmomentgradient auf unter 80Nm/s begrenzt wird.

5. Verfahren nach einem der vorherigen Ansprüche,
wobei der Drehmomentgradient auf unter 50Nm/s begrenzt wird, insbesondere in einem Bereich von über 30Nm/s und unter 50Nm/s liegt.

6. Verfahren nach einem der vorherigen Ansprüche,
wobei der Drehmomentgradient der Verbrennungskraftmaschine begrenzt wird, wenn eine Temperatur eines Abgases der Verbrennungskraftmaschine unterhalb eines Grenzwertes liegt, insbesondere unterhalb 220°C, insbesondere unterhalb 210°C, insbesondere unterhalb 200°C.

7. Verfahren nach Anspruch 6,
wobei, wenn die Temperatur des Abgases der Verbrennungskraftmaschine oberhalb des Grenzwertes liegt, der Drehmomentgradient nicht begrenzt wird, und auf Basis der Solldrehmomentdaten die Verbrennungskraftmaschinenansteuerungsdaten und Elektromotorenansteuerungsdaten bestimmt werden.

8. Verfahren nach Anspruch 6 und 7, wobei ein Übergang zwischen begrenztem und nicht begrenztem Drehmomentgradient für einen Zwischenbereich von 10K, besser 5K definiert ist.

9. Steuerung zur Ausführung eines Verfahrens nach einem der Ansprüche 1 bis 8.

10. Hybridantrieb, mit einer Steuerung nach Anspruch 9.

11. Kraftfahrzeug, mit einer Steuerung nach Anspruch 9 und/oder einem Hybridantrieb nach Anspruch 10.
